# EUROPEAN PATENT APPLICATION

(11) **EP 4 432 378 A1**
(43) Date of publication of application: **18.09.2024**
(21) Application number: 22893147.3
(22) Date of filing: 08.11.2022
(51) Int. Cl.: H01M 4/04, H01M 4/139, H01M 4/62

(54) **METHOD FOR DRY-MANUFACTURING SECONDARY BATTERY ELECTRODE**

(30) Priority: 10.11.2021 KR 20210154014; 01.11.2022 KR 20220143743
(71) Applicant: Yunsung F&C Co., Ltd, Anseong-si, Gyeonggi-do 17548 (KR)
(72) Inventor: KIM, Han Sung, Gwangju-si Gyeonggi-do 12711 (KR); HWANG, Wook Ryol, Jinju-si Gyeongsangnam-do 52855 (KR); YOO, Jung Keun, Changwon-si Gyeongsangnam-do 51508 (KR); YOON, Ji Hee, Changwon-si Gyeongsangnam-do 51508 (KR); YI, Jin Woo, Changwon-si Gyeongsangnam-do 51508 (KR); OH, Young Seok, Changwon-si Gyeongsangnam-do 51508 (KR); UM, Moon Kwang, Changwon-si Gyeongsangnam-do 51508 (KR)
(74) Representative: M. Zardi & Co S.A.
(86) International application number: PCT/KR2022/017447
(87) International publication number: WO 2023/085727

(57) **Abstract**

The present invention relates to a method for manufacturing a dry electrode for a secondary battery, the method including the steps of: a. mixing active materials and binders to make a mixture and putting the mixture to a screw mixer; b. rotating the screw mixer to move the mixture forward and allowing the mixture to be primarily heated and melted; c. rotating the screw mixer to move the heated and melted mixture forward and allowing the mixture to be agitated; d. rotating the screw mixer to move the agitated mixture forward and allowing the mixture to be secondarily heated and agitated; e. rotating the screw mixer to pressurize the secondarily heated and agitated mixture forward and allowing the mixture to move to the end of a nozzle; f. allowing the mixture discharged to the form of a film through the nozzle to be compressed through rollers located above and under the mixture; and g. attaching the film to a metal foil to manufacture the dry electrode.

## Description

### Technical Field

The present invention relates to a method for manufacturing a secondary battery, without having any dry process, more specifically to a method for producing pores among active materials, while applying a thermoplastic binder as a material for binding the active materials, thereby solving a problem such as electrolyte impregnation impossibility due to pores not formed among the active materials when the thermoplastic binder is used.

### Background Art

Recently, electric vehicles having secondary batteries replacing internal combustion engines have been prevailed and grown rapidly.

About one hundred million internal combustion engine vehicles around the world in a single year are sold, and because of carbon dioxide emitted from the internal combustion engine vehicles, global warming and various types of natural disasters related to the global warming occur in the world. As a result, electric vehicles using hydrogen fuel cells and electric vehicles using batteries have emerged, and among them, the electric vehicles using batteries are adopted as realistic alternatives.

At present, lithium ion batteries are chiefly used as the batteries for the electric vehicles, and in the future, it is expected that the lithium ion batteries will be replaced with solid-state batteries.

Existing lithium ion batteries are small batteries built in laptop computers or smartphones, but as the electric vehicles have been prevailed, the demands for large lithium ion batteries capable of allowing driving 500 km upon one-time charging have increased explosively. Further, facilities for producing the batteries become bulky.

To manufacture the lithium ion battery, first, a cathode electrode and an anode electrode are made and coupled to each other, while placing a separator film therebetween, and next, they are laminatedly put in a case. After that, electrolytes are filled into the battery and initially charged.

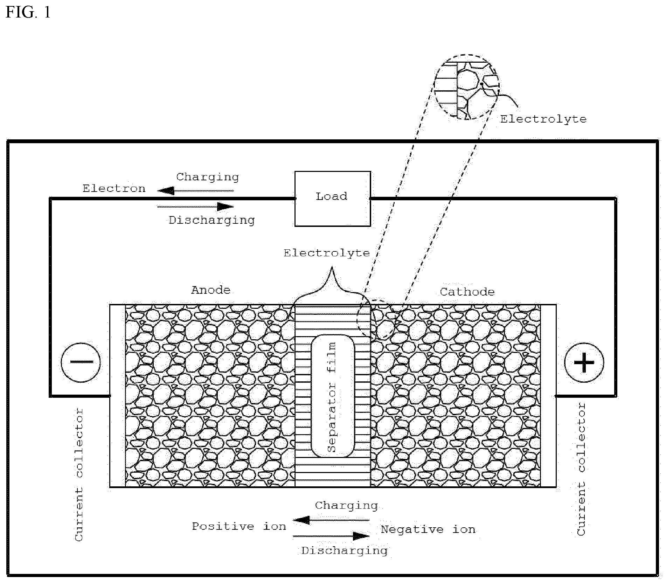

A basic structure of the lithium-ion battery made using the above-mentioned method is suggested as shown in FIG. 1.

Referring to FIG. 1, active materials constituting cathode and anode are attached to current collectors to given thicknesses, and while a separator film is being located between the two electrode plates, electrolytes are filled into the pores formed among the active materials.

If charging and discharging are performed, the lithium ions present in the opposite electrode plates to each other gain electrons (charging) and lose electrons (discharging), so that they move to the opposite sides to each other through the separator film and create the flow of electricity to conductive wires connected to the electrode plates.

In this case, the electrolytes are needed to allow the lithium ions to smoothly pass through the active materials, and a current lithium ion battery has liquid electrolytes.

The solid-state battery as estimated as the future battery has solid electrolytes and a film made of electrolytes and replacing the separator film.

To manufacture the lithium ion battery, as mentioned above, the cathode electrode and the anode electrode are made, and each electrode plate consists of a current collector and active powder materials.

The active materials of the cathode are the powder (having a diameter of about 10 µm) of lithium compounds (for example, Li, Ni, Co, Mn, Al, etc.), and the active materials of the anode are the powder (having a diameter of about 10 µm) of graphite or silicon.

In the case of the cathode electrode, the active powder materials are laminated on a thin aluminum plate having about 10 µm to a thickness of about 100 µm, and in the case of the anode electrode, the active powder materials are laminated on a thin copper plate having about 10 µm to a thickness of about 100 µm.

To manufacture the electrode plates, in this case, the active powder materials have to be attached to one another, and further, the powder materials should be bonded to the current collectors. Moreover, pores into which electrolytes are impregnated have to be formed in the active powder materials.

If the pores do not exist, it is impossible to perform electrolyte impregnation, so that ions do not pass through the separator film, thereby causing non-operation of the battery. To solve such a problem, a currently suggested electrode manufacturing method is as follows.

A binder solution is first made. To make a binder solution for the cathode, PVDF is melted in an NMP (N-Methyl-2-Pyrrolidone) solution, and to make a binder solution for the anode, an SBR (styrere=butadiene rubber) solution and carboxy methyl cellulose (CMC) are melted in ultrapure water (DI water).

The active powder materials are put in the binder solution and agitated together with the binder solution. As a result, a slurry solution in which the active powder materials are uniformly agitated with the binder solution is obtained.

The slurry solution is fed to coating equipment, and if the slurry solution is coated onto the current collectors through a T-die, next, primary electrode plates are made.

In this case, however, the solvents (in the case of the cathode, NMP, and in the case of the anode, ultrapure water) remain in the active powder materials existing in the coated active powder material films, and accordingly, the electrolytes cannot be impregnated, so that in this state, the battery cannot be made.

The solvents remaining in the active powder materials are removed through a dry process after the coating process has been performed.

The electrodes with their dry process are compressed to about 20% of their original thickness by means of a press, thereby being made as the battery.

If the solvents remaining in the active powder materials are removed through the dry process, the corresponding spaces are empty, and accordingly, pores are formed in the spaces and filled with the electrolytes.

Among such secondary battery manufacturing processes, the dry process is performed at the highest cost.

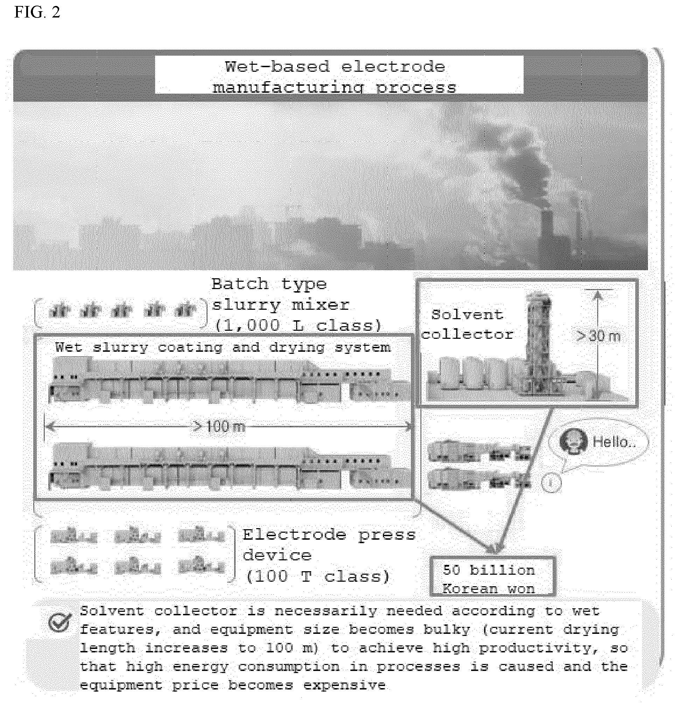

An explanation of a drier will be given with reference to FIG. 2, and the dry process is performed at a temperature of about 150° for about one minute. As a current maximum electrode plate production speed of a battery company is about 100 m per minute, a 100 m drying furnace is needed.

The solvent evaporated from the drying furnace has to be collected, and accordingly, a solvent collector for collecting the solvent evaporated from the drying furnace is additionally needed.

It is known that the cost for the dry process per one electrode manufacturing facility is about 30 to 50 billion Korean won, and as the battery company has the electrode manufacturing facilities corresponding to cathode and anode lines, the maximum 100 billion Korean won as only the cost for the dry-related facilities is needed for one line (the cathode and anode lines) of the battery.

Further, the electricity cost for operating the drying furnaces and the solvent collectors is enormous. In the battery manufacturing process for the electric vehicle replacing the internal combustion engine vehicle to reduce the emission of carbon dioxide, contradictorily, the electricity needed for the drying furnaces is produced from a power generator so that carbon dioxide is emitted in large quantities.

As shown in FIG. 2, it is appreciated that large scale driers are used in a wet-based electrode manufacturing process to collect the solvents.

To solve such a problem, active material films are made, without any solvents, and the films are attached to current collectors, thereby making electrode plates.

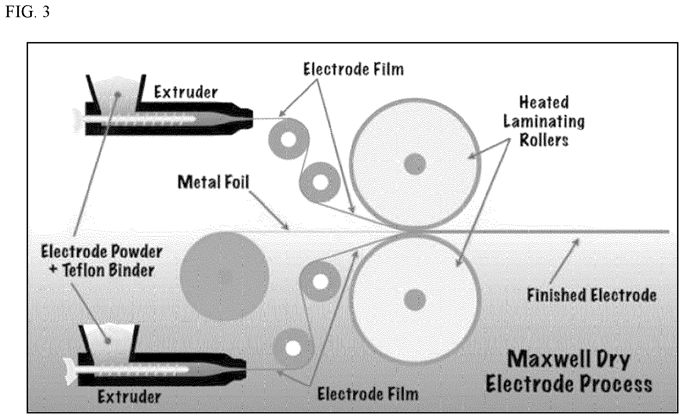

An explanation of the electrode plates made by making the active material films and attaching the films to the current collectors will be given with reference to FIG. 3, and in this case, a binder and active materials are fed to a twin screw mixer and heated (melted) and agitated therein. Next, the mixtures are extruded from nozzles to the form of films, and the films and current collector foils pass through heated rollers and are bonded (laminated) to each other.

As shown in FIG. 3, the binder is melted by heat in the heating and agitating process in the twin screw mixer and connects the active powder materials to one another, so that the mixture is extruded and molded to the form of the film.

However, a problem exists in the method as shown in FIG. 3. That is, if the binder is melted by heat and completely surrounds the active materials, the binder is full among the active materials, so that pores are not formed, thereby making it impossible to perform electrolyte impregnation.

Accordingly, in the method as shown in FIG. 3, a fluorinated polymer such as polytetrafluoroethylene (PTFE) is used as the binder.

The PTFE (product name, Teflon) has a very high melting point and extremely high lubricity so that it is not attached to the surfaces of the active materials.

Using such features, PTFE powder is mixed with the active materials and heated appropriately (to a temperature of about 130°, and in this case, the melting point of PTFE is 327°), and next, PTFE extends to the form of threads by means of a kneader.

The PTFE, which is mixed with the active materials and extends to the form of the threads, is mechanically held and extruded, and next, the PTFE is kept to the form of a film.

To extend the PTFE to the form of the threads at a low temperature, however, a strong kneader is needed, and in this case, it is hard to perform the extension of the PTFE successively, thereby making it difficult to achieve mass production of the active material films, without any stop.

In the case of a currently used experimental method, the binder (PTFE) is mixed with the active materials and agitated in the form of powder, and next, the mixture is put into a heated kneader to allow the binder to be fibrillized, thereby making pallets in which the active materials and the binder are mixed. The cold pallets discharged from the kneader are pulverized again, and the pulverized powder is put between two rollers and made to the form of a film.

All of the processes are batch processes as intermittent working methods, and it is hard that the respective processes are sequentially performed, so that it is impossible to achieve mass production of dry electrodes through the above-mentioned electrode manufacturing method.

However, the reason why the dry electrode is made using the method is because PTFE has no adhesion property so that the pores among the active materials are not filled with PTFE.

Accordingly, the electrode manufacturing method using the PTFE-based binder is suggested as a current dry electrode manufacturing method, but because of the use of PTFE, there is a limitation in achieving the mass production of dry electrodes.

A patent for such an electrode manufacturing method is granted to Maxwell Technology of U.S.A., and Tesla acquires Maxwell Technology and produces the batteries for electric vehicles using the electrode manufacturing method. However, Tesla fails to achieve mass production and sells the technology to another company on July, 2021 two years later. This proves that the method is hard to be applied for mass production,

The patent with the application No. 15374043 has been filed on December 9, 2016 in U.S.A. and registered with Patent No. 10547057 on January 28, 2020.

Claims 1, 6 and 7 of the Patent are as follows.
[00001] 1. A method of manufacturing an energy storage device, comprising: providing conductive particles;
[00001] 1. A method of manufacturing an energy storage device, comprising: providing conductive particles;
providing dry binder particles consisting essentially of a single fibrillizable binder material in the absence of other binders;
providing dry binder particles consisting essentially of a single fibrillizable binder material in the absence of other binders;
intermixing the conductive and dry binder particles; and
55]intermixing the conductive and dry binder particles; and
forming a film with the intermixed conductive and dry binder particles, wherein the intermixing and forming are performed without the substantial use of processing solvent and lubricant.
forming a film with the intermixed conductive and dry binder particles, wherein the intermixing and forming are performed without the substantial use of processing solvent and lubricant.
[00006] 6. The method of claim 1, wherein the fibrillizable binder comprises a fluorinated polymer.
[00006] 6. The method of claim 1, wherein the fibrillizable binder comprises a fluorinated polymer.
[00007] 7. The method of claim 6, wherein the fluorinated polymer comprises PTFE.
[00007] 7. The method of claim 6, wherein the fluorinated polymer comprises PTFE.

That is, Claim 1 defines a method of manufacturing an energy storage device, comprising: providing conductive particles; providing dry binder particles consisting essentially of a single fibrillizable binder material in the absence of other binders; intermixing the conductive and dry binder particles; and forming a film with the intermixed conductive and dry binder particles, wherein the intermixing and forming are performed without the substantial use of processing solvent and lubricant.

Claim 6 defines the method of claim 1 wherein the fibrillizable binder comprises a fluorinated polymer.

Claim 7 defines the method of claim 6, wherein the fluorinated polymer comprises PTFE.

As mentioned above, Claim 1 defines using the fibrillizable binder material as a binder, which causes the scope of the patented invention to be broadened, and if PTFE is used and fibrillized through a kneader and active material films are intermixed with the PTFE to produce a battery through a batch method, such a method violates the above-mentioned Patent.

Due to such problems, it is hard that the currently proposed PTFE binder-based dry electrode manufacturing method replaces the existing wet electrode manufacturing method.

According to the current wet electrode manufacturing method, mirror sheet electrodes each having a width of 1 m are produced at a speed of 100 m or more per minute successively, but according to the PTFE binder-based dry electrode manufacturing method, the dry electrodes are intermittently produced in batch processing in a lab scale.

At present, lithium ion batteries are chiefly used as the batteries for the electric vehicles, and in the future, it is expected that the lithium ion batteries will be replaced with solid-state batteries.

The existing lithium ion batteries are small batteries built in laptop computers or smartphones, but as the electric vehicles have been prevailed, the demands for large lithium ion batteries capable of allowing driving 500 km upon one-time charging have increased explosively. Further, facilities for producing the batteries become bulky.

In the process of manufacturing the lithium ion batteries, the binder has to be dried, and therefore, a large scale drier is needed to achieve a desired amount of production. However, the large scale drier has many difficulties in a production cost and operation.

According to the dry electrode manufacturing process, PTFE, which is not attached to active materials, is fibrillized so that a film is made, but because of high temperature characteristics of PTFE, it is hard to achieve mass production. To solve such a problem, a thermoplastic binder and active materials are put in a twin screw binder, and the binder is melted and agitated with the active materials. Next, the mixture is extruded through a nozzle to produce active material films successively. However, in this case, the binder is filled into the spaces among the active materials, so that no pores exist, thereby making it impossible to perform electrolyte impregnation.

### Disclosure

### Technical Problem

Accordingly, the present invention has been made in view of the above-mentioned problems occurring in the related art, and it is an object of the present invention to provide a method for manufacturing a dry electrode for a secondary battery that is capable of having no dry process in manufacturing the secondary battery.

To do this, the present invention proposes a method for manufacturing a great number of dry electrodes, without no solvent, and an electrode for the secondary battery that is made using such a manufacturing method.

Accordingly, the method for manufacturing a dry electrode for a secondary battery according to the present invention is carried out by adopting a thermoplastic binder as a binder for binding active materials so that pores are formed among the active materials, thereby solving the problem occurring when no pores are formed among the active materials and allowing electrolytes to be impregnated into the pores.

The technical problems to be achieved through the present invention are not limited as mentioned above, and other technical problems not mentioned herein will be obviously understood by one of ordinary skill in the art through the following description.

### Technical Solution

To accomplish the above-mentioned objects, there is provided a method for manufacturing a dry electrode for a secondary battery, and in this case, a binder having no solvent is used so that to solve a problem where no pores are formed among active materials, a foaming process is adopted.

In this case, the dry electrode for the secondary battery is an electrode that is made by forming pores through a foaming agent, while removing a dry process because of the binder having no solvent, thereby solving the problem occurring from non-pores (that is, pores are not formed to fail to impregnate electrolytes thereinto) caused by the binder having no solvent.

Further, chemical foaming agents or gases may be freely adopted as foaming agents for the foaming of the binder.

First, an explanation of an example where the chemical foaming agents are used as the foaming agents will be given.

According to the present invention, there is provided a method for manufacturing a dry electrode for a secondary battery, the method including the steps of: a. mixing active materials, binders, and conductive additives to make a mixture and putting the mixture to a screw mixer;
b. rotating the screw mixer to move the mixture forward and allowing the mixture to be primarily heated and melted;
c. rotating the screw mixer to move the heated and melted mixture forward and allowing the mixture to be agitated;
d. rotating the screw mixer to move the agitated mixture forward and allowing the mixture to be secondarily heated and agitated;
e. rotating the screw mixer to pressurize the secondarily heated and agitated mixture forward and allowing the mixture to move to the end of a nozzle;
f. allowing the mixture discharged to the form of a film through the nozzle to be compressed through rollers located above and under the mixture; and
g. attaching the film to a metal foil to manufacture the dry electrode.

Further, in the step a, the active materials, the binders, and the conductive additives are mixed and put into the screw mixer, and in some cases, they are individually put into the screw mixer.

The mixture is made by adding organic or inorganic foaming agents thereto, and in the step b, a primary heating temperature is higher than a melting temperature of the binders so that the binders are melted and mixed with the active materials, the conductive additives, and the foaming agents.

Next, in the step d, a secondary heating temperature is higher than an evaporation temperature of the foaming agents so that the foaming agent is evaporated and mixed with the melted binders, and in the step e, the agitated mixture is pressurized and moves forward so that the evaporated foaming agents are compressedly mixed with the melted binders.

In this case, desirably, the foaming agents are one or more selected from carbon monoxide, carbon dioxide, helium, butane, pentane, nitrogen, water vapor, and nitrogen compounds.

Next, in the step f, if the mixture is discharged through the nozzle, the foaming agents mixed with the melted binders are expanded to form air bubbles so that the pores formed by the air bubbles are utilized as spaces into which electrolytes are impregnated when the electrolytes are injected.

According to the present invention, further, if the foaming agents are foamed, they turn into one or more selected from carbon monoxide, carbon dioxide, helium, butane, pentane, nitrogen, water vapor, and nitrogen compounds and are thus evaporated, so that open-cell pores are formed on the binders.

Next, an explanation of another example where gases or supercritical fluids are injected to form the pores will be given.

According to the present invention, there is provided a method for manufacturing a dry electrode for a secondary battery, the method including the steps of: a. mixing active materials, binders, and conductive additives to make a mixture and putting the mixture to a screw mixer;
b. rotating the screw mixer to move the mixture forward and allowing the mixture to be primarily heated and melted;
c. injecting one of carbon dioxide, nitrogen, helium, butane, pentane, and hydrocarbon in a state of a gas or supercritical fluid into the screw mixer;
d. rotating the screw mixer to move the heated and melted mixture forward and allowing the mixture to be agitated;
e. rotating the screw mixer to pressurize the secondarily heated and agitated mixture forward and allowing the mixture to move to the end of a nozzle;
f. allowing the mixture discharged to the form of a film through the nozzle to be compressed through rollers located above and under the mixture; and
g. attaching the film to a metal foil to manufacture the dry electrode.

Further, in the step e, the agitated mixture is pressurized and moves forward so that the gases or supercritical fluids injected thereinto are mixed with the melted binders, and in the step f, if the mixture is discharged through the nozzle, the gases or supercritical fluids mixed with the melted binders are expanded to form air bubbles, and if the amounts or temperatures of the gases or supercritical fluids are controlled, the gases are discharged to allow the air bubbles to be connected and open-pored so that electrolytes are filled into the pores.

In this case, desirably, the supercritical fluids are one or more selected from carbon dioxide, nitrogen, helium, butane, pentane, and hydrocarbon being in a supercritical state.

The binders as used in the above-mentioned method are desirably thermoplastic resins, and since the solvent is not used, a dry process is removed. Further, the foaming agents are applied to form the pores on the binders so that the spaces for impregnating the electrolytes are ensured.

Characteristics and advantages of the present invention will be more clearly understood from the detailed description as will be described below and the attached drawings.

All terms used herein, including technical or scientific terms, unless otherwise defined, have the same meanings which are typically understood by those having ordinary skill in the art. The terms, such as ones defined in common dictionaries, should be interpreted as having the same meanings as terms in the context of pertinent technology, and should not be interpreted as having ideal or excessively formal meanings unless clearly defined in the specification.

### Advantageous Effects of Invention

According to the present invention, as described above, the dry electrode for the secondary battery can be easily manufactured.

Further, a drier having a length of about 100 m with respect to the reference length of the secondary battery is not needed, and as a solvent is not evaporated to need no solvent collector, an electricity cost for operating the drier can be saved and a factory site can be greatly reduced through the removal of the drier.

Furthermore, since the 100 m solvent drier is not needed, there is no need to operate the solvent collector, so that a battery manufacturing cost can be reduced and environmental problems such as carbon dioxide emission and organic solvent discharge cannot happen.

### Brief Description of Drawings

FIG. 1 shows a basic structure of a secondary battery.
FIG. 2 shows dry equipment for a secondary battery.
FIG. 3 shows a process of making active material films, attaching the active material films onto current collectors, and finally making electrode plates.
FIG. 4 shows a structure of an electrode for a secondary battery.
FIG. 5 shows a process of forming pores among active materials in a wet electrode process.
FIG. 6 shows a configuration of a general twin screw mixer.
FIG. 7 shows a process of making a mixture for a dry electrode by means of a screw mixer.

### Best Mode for Invention

Hereinafter, example embodiments of a prefabricated plastic pallet according to the present invention will be described with reference to the accompanying drawings. In the description, the thicknesses of the lines or the sizes of the components shown in the drawing may be magnified for the clarity and convenience of the description.

Further, the terms as will be discussed later are defined in accordance with the functions of the present invention, but may be varied under the intention or regulation of a user or operator. Therefore, they should be defined on the basis of the whole scope of the present invention.

The present invention may be modified in various ways and may have several exemplary embodiments. Specific exemplary embodiments of the present invention are illustrated in the drawings and described in detail in the detailed description. However, this does not limit the invention within specific embodiments and it should be understood that the invention covers all the modifications, equivalents, and replacements within the idea and technical scope of the invention.

According to the process of manufacturing a dry electrode, as currently suggested, polytetrafluoroethylene (PTFE), which is not attached to active materials, is fibrillized to form pores among the active materials, so that films are made. However, disadvantageously, it is hard to achieve mass production because of high temperature characteristics of PTFE.

To solve such a problem, a thermoplastic resin and active materials are heated and agitated, so that the heated and agitated thermoplastic resin and active materials are produced to the form of films successively even through general twin screw extruders.

However, in this case, since pores are not formed among the active materials, electrolytes do not enter the spaces among the active materials.

In this case, the pores are forcedly formed among the active materials by means of an inorganic foaming agent. That is, when the active powder materials and binders are agitated through the twin screw extruder, the foaming agents are put and agitated together with them.

During the agitation, the binders are melted and uniformly mixed with the active materials and the foaming agents, and next, the mixture passes through a given section set above a temperature at which the foaming agents are dissolved.

Within the set section, the foaming agents are dissolved by means of heat and emit gases such as carbon dioxide, nitrogen, water vapor, and the like, and the gases meltedly enter the melted binder solutions. Next, the mixture passes through a nozzle, is extruded to the form of a film, and is lowered in pressure, so that the gases are expanded to form the pores in the spaces among the active materials.

Since all of organic and inorganic foaming agents discharge a small quantity of carbon dioxide or water, the above-mentioned method may be adopted in making the dry electrode for a secondary battery through the removal of the drier to cause a small amount of electricity and achieve the reduction of carbon dioxide, but the above-mentioned method is not desirable.

If the pores are formed by using the organic or inorganic foaming agents, the carbon dioxide emitted has to be collected using a collection facility.

According to another foaming method, gases or supercritical fluids such as carbon dioxide, nitrogen, helium, butane, pentane, and hydrocarbon are used.

Active materials and binders are put into a screw extruder, and next, heat is applied to allow the binders to be melted, so that the active materials and the binders are agitated. Carbon dioxide, nitrogen, helium, butane, pentane, and hydrocarbon, which are made to a supercritical state by means of a gas or supercritical pump are impregnated into the melted and agitated liquid, and next, the mixture of the supercritical fluids, the active materials, and the binders is additionally agitated.

If the mixture is extruded through a nozzle, one or more gases among carbon dioxide, nitrogen, helium, butane, pentane, and hydrocarbon in the state of gases or supercritical fluids which are uniformly diffused into the binders are expanded to form fine bubbles.

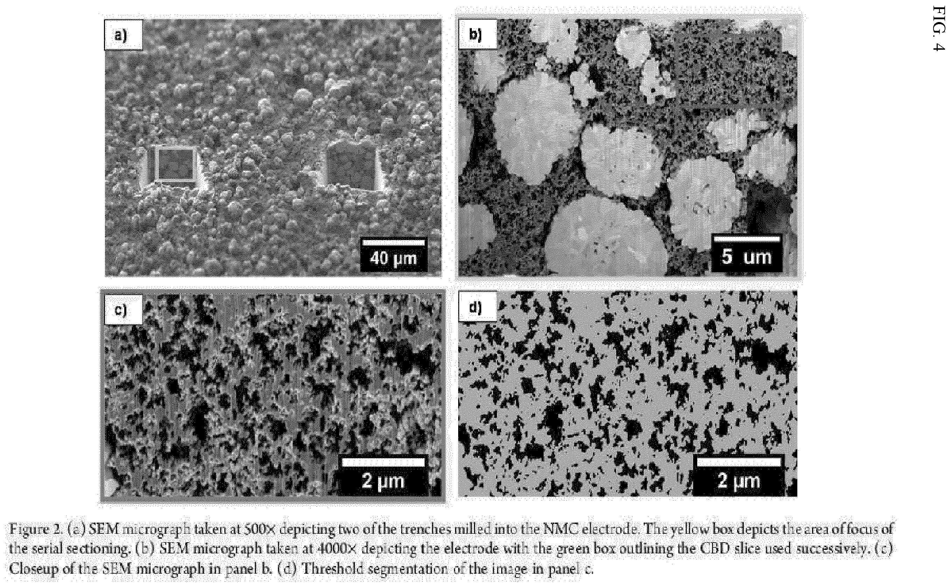

FIG. 4 shows a structure of an electrode for a secondary battery.

Referring to FIG. 4, circular active materials having particle sizes of about 10 µm are attached to one another by means of binders having pores.

That is, FIG. 4 is a three-dimensionally visualized photograph for the sectional area of a battery electrode. In detail, FIG. 4a shows an SEM micrograph taken at 500X depicting two of the trenches milled into a portion of the electrode, FIG. 4b shows an SEM micrograph taken at 4000X depicting the electrode with the yellow box of the trench of FIG. 4a, FIG. 4c is an enlarged photograph for the green portion of FIG. 4b, and FIG. 4d is a photograph showing vividly processed pores of FIG. 4c.

In the above wet electrode process, a solvent is evaporated after a slurry has been coated, thereby forming the pores (as shown by black of FIG. 4d).

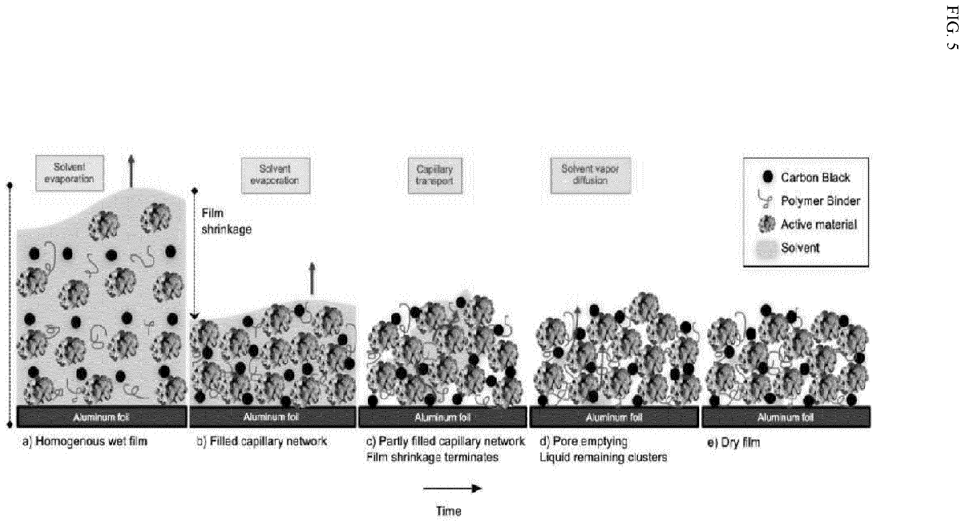

FIG. 5 shows a process of forming pores among active materials in the wet electrode process.

FIG. 5 shows a current method for producing a lithium-ion battery (LIB). In detail, FIG. 5a shows a wet film with uniform distribution, FIG. 5b shows a state where a solvent is evaporated to cause film shrinkage so that the interior of the wet film has a filled capillary network, FIG. 5c shows a state where the solvent is kept evaporated but partly filled in the capillary network so that the film shrinkage terminates, FIG. 5d shows the liquid (solvent) remaining in pores, and FIG. 5e shows a dry film from which the liquid (solvent) has been completely evaporated.

However, the method for manufacturing the dry electrode cannot use the solvent, unlike the wet electrode process, and accordingly, the binders are melted by heat and agitated with the active materials, thereby making it impossible to form the pores through the dry process.

According to the present invention, therefore, the pores are formed in the interior of the electrodes by means of foaming, and in detail, organic or inorganic foaming agents and gases or supercritical fluids are selectively used.

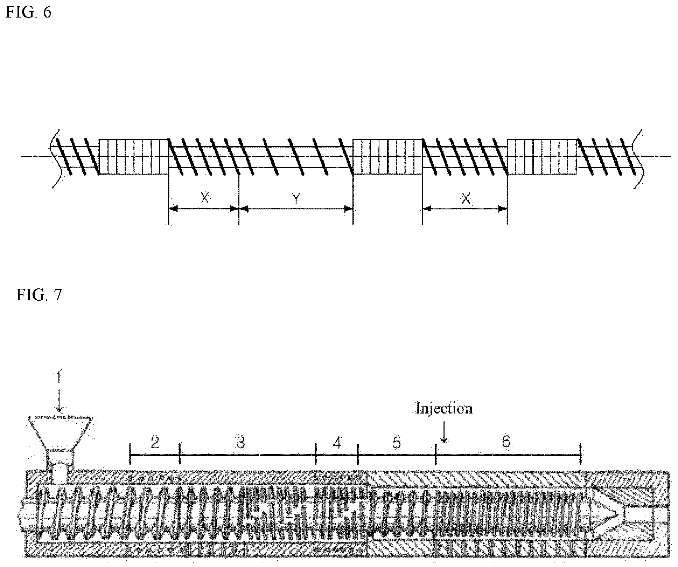

The processes will be explained in detail with reference to FIGs. 6 and 7.

A single or twin screw mixer is used, and in this case, the screw mixer is configured to have various types of exchangeable blades connected in series to a single long shaft.

In the case of two blades having the same length, for example, if the blade having two-turn pitch with respect to a diameter thereof is arranged next to the blade having one-turn pitch with respect to a diameter thereof, a higher pressure than a pressure at the front stage is applied to the region of the blade having two-turn pitch.

Contrarily, if the blade having one-turn pitch is arranged next to the blade having two-turn pitch, a low pressure is applied to the region of the blade having one-turn pitch, so that the gases attached to the materials agitated in the screw mixer are emitted through a hole formed on a barrel in the region of the low pressure.

As shown in FIG. 6, a `Y' region of a general twin screw mixer is a low pressure region (the blade pitch of the Y region is larger than that of the X region) when compared to an 'X' region, and accordingly, the hole is formed on the Y region to emit the gases.

When a mixture for the dry electrode is made using the above-mentioned method, the pores are formed inside the binders through the following method.

Referring to FIG. 7, a reference numeral 1 represents a powder mixture, a reference numeral 2 heating and melting, a reference numeral 3 transporting and agitating, a reference numeral 4 additional heating and agitating, a reference numeral 5 transporting, and a reference numeral 6 a pressurizing region.

Under the configuration as shown in FIG. 7, foaming agent powder for forming pores is added to the powder mixture 1 (active materials + binders + conductive additives).

The mixture is heated and melted, while passing through the region of the reference numeral 2, and next, the melted mixture is uniformly agitated in the region of the reference numeral 3.

The foaming agents of the agitated melted mixture turn into gases and are mixed with the melted mixture, while passing through the region of the reference numeral 4 that is heated over a foaming temperature thereof, and next, the melted mixture is compressed, while passing through the region of the reference numeral 6. After that, if the melted mixture is discharged from a nozzle, the gases mixed with the melted mixture become expanded so that air bubbles are formed.

If an agitating blade is additionally located in the region of the reference numeral 6, the gases are uniformly mixed with the melted mixture.

In this case, the pores are closed or open according to the amount or temperature of the foaming agents added.

According to another embodiment of the present invention, the gases or supercritical fluids as the foaming agents are used.

The powder mixture 1 of active materials, binders, and conductive additives is made, without any foaming agent, and next, the powder mixture 1 is heated to cause the binders to be melted, while passing through the region of the reference numeral 2. After that, the melted mixture 1 is agitated, while passing through the regions of the reference numerals 3 and 4.

Next, carbon dioxide, nitrogen, helium, butane, pentane, and hydrocarbon, which are made to a gas or supercritical state, are impregnated into the melted and agitated mixture at the end of the transporting region of the reference numeral 5.

The impregnated gases or supercritical fluids are mixed with the binders, and while passing through the high pressure region of the reference numeral 6, the mixture is additionally agitated so that it is uniformly mixed with the gases or supercritical fluids. After that, at the moment when the mixture is discharged through the nozzle, it is released from the pressure thereof, and accordingly, the compressed gases mixed with the binders are expanded to form air bubbles.

In this case, the pores are closed or open according to the amount or temperature of the gases or supercritical fluids impregnated.

As described above, the existing porous electrode for the secondary battery is produced by making a binder solution made by melting binders in a solvent, coating the binder solution onto a current collector, and forming pores through the dry process.

In such processes, a high-priced drier is needed, and to operate the drier, a high electricity cost is caused. According to the present invention, however, the binders are melted by heat through the twin screw mixer and agitated with the active materials. Next, the organic or inorganic chemical foaming agents or gases such as carbon dioxide, nitrogen, helium, butane, pentane, and hydrocarbon or the supercritical fluids of the gases are agitated with the mixture, and after that, when the mixture is made to the form of a film through the nozzle, foaming is made to form the pores.

Through such a pore forming method, a drier having a length of about 100 m with respect to the reference length of the secondary battery is not needed, and as a solvent is not evaporated to need no solvent collector, an electricity cost for operating the drier can be saved and a factory site can be greatly reduced through the removal of the drier.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above teachings.

It is therefore intended that the scope of the invention be limited not by this detailed description, but rather by the claims appended hereto.

### [Explanations of Reference Numerals]

1 represents a powder mixture, 2 heating and melting, 3 transporting and agitating, 4 additional heating and agitating, 5 transporting, and 6 pressurizing region

## Claims

1. A method for manufacturing a dry electrode for a secondary battery, the method comprising the steps of:
a. mixing active materials and binders to make a mixture and putting the mixture to a screw mixer;
b. rotating the screw mixer to move the mixture forward and allowing the mixture to be primarily heated and melted;
c. rotating the screw mixer to move the heated and melted mixture forward and allowing the mixture to be agitated;
d. rotating the screw mixer to move the agitated mixture forward and allowing the mixture to be secondarily heated and agitated;
e. rotating the screw mixer to pressurize the secondarily heated and agitated mixture forward and allowing the mixture to move to the end of a nozzle;
f. allowing the mixture discharged to the form of a film through the nozzle to be compressed through rollers located above and under the mixture; and
g. attaching the film to a metal foil to manufacture the dry electrode.

2. The method according to claim 1, wherein the mixture is made by adding conductive additives.

3. The method according to claim 2, wherein in the step a, organic or inorganic foaming agents that are dissolved to gases by means of heat are added to the mixture;
in the step b, a primary heating temperature is higher than a melting temperature of the binders so that the binders are melted and mixed with the active materials, the conductive additives, and the foaming agents;
in the step d, a secondary heating temperature is higher than an evaporation temperature of the foaming agents so that the foaming agents are evaporated and mixed with the melted binders;
in the step e, the agitated mixture is pressurized and moves forward so that the evaporated foaming agents are mixed with the melted binders; and
in the step f, if the mixture is discharged through the nozzle, the foaming agents mixed with the melted binder are expanded to form air bubbles so that electrolytes are filled into the pores formed by the air bubbles.

4. A method for manufacturing a dry electrode for a secondary battery, the method comprising the steps of:
a. mixing active materials and binders to make a mixture and putting the mixture to a screw mixer;
b. rotating the screw mixer to move the mixture forward and allowing the mixture to be primarily heated and melted;
c. injecting gases or supercritical fluids into the screw mixer;
d. rotating the screw mixer to move the heated and melted mixture forward and allowing the mixture to be agitated;
e. rotating the screw mixer to pressurize the secondarily heated and agitated mixture forward and allowing the mixture to move to the end of a nozzle;
f. allowing the mixture discharged to the form of a film through the nozzle to be compressed through rollers located above and under the mixture; and
g. attaching the film to a metal foil to manufacture the dry electrode.

5. The method according to claim 4, wherein the mixture is made by adding conductive additives.

6. The method according to claim 4, wherein the gases or supercritical fluids are one or more selected from carbon dioxide, nitrogen, helium, butane, pentane, and hydrocarbon;
in the step e, the agitated mixture is pressurized and moves forward so that the gases or supercritical fluids injected thereinto are mixed with the melted binders; and
in the step f, if the mixture is discharged through the nozzle, the gases or supercritical fluids mixed with the melted binders are expanded to form air bubbles so that electrolytes are filled into the pores formed by the air bubbles.

7. A dry electrode for a secondary battery made by forming pores on binders according to any one of claims 1 to 7, without having any dry process.
